# EUROPEAN PATENT APPLICATION

(11) **EP 4 429 378 A1**
(43) Date of publication of application: **11.09.2024**
(21) Application number: 22886909.5
(22) Date of filing: 21.10.2022
(51) Int. Cl.: H04W 72/044, H04W 48/10

(54) **WIRELESS COMMUNICATION DEVICE, WIRELESS COMMUNICATION TERMINAL, AND WIRELESS COMMUNICATION METHOD**

(30) Priority: 01.11.2021 JP 2021178556
(71) Applicant: Sony Semiconductor Solutions Corporation, Atsugi-shi, Kanagawa 243-0014 (JP)
(72) Inventor: SAEKI, Junichi, Atsugi-shi, Kanagawa 243-0014 (JP); NISHIDA, Keigo, Atsugi-shi, Kanagawa 243-0014 (JP)
(74) Representative: Witte, Weller & Partner Patentanwälte mbB
(86) International application number: PCT/JP2022/039357
(87) International publication number: WO 2023/074582

(57) **Abstract**

The present technology relates to a wireless communication device, a wireless communication terminal, and a wireless communication method capable of avoiding frame interference between base stations.

The wireless communication device performs control to transmit an identification frame including identification information for identifying a base station, and control to acquire data from a cloud to a wireless communication terminal on the basis of the request frame and transmit a data frame including the acquired data to the wireless communication terminal in a case where the identification information included in a request frame transmitted from the wireless communication terminal on the basis of the identification information matches the identification information of its own. The present technology can be applied to a wireless communication system.

## Description

### TECHNICAL FIELD

The present technology relates to a wireless communication device, a wireless communication terminal, and a wireless communication method, and more particularly relates to a wireless communication device, a wireless communication terminal, and a wireless communication method capable of avoiding frame interference between base stations.

### BACKGROUND ART

Currently, low power wide area (LPWA) network services suitable for the Internet of Things (IoT) are provided. Since a communication distance in the LPWA network service is long, frames from a plurality of base stations may arrive at the terminal. Therefore, in a case where a frequency hopping between the base stations is the same, the frames always collide with each other.

Therefore, in the uplink (UL: UpLink) of the LPWA network service, when the base station exchanges with a plurality of terminals, the terminals multiplex data frames in a frequency (channel) direction and a time direction by using a pseudo-random algorithm and transmit the frames to the base station (see Patent Document 1).

Since the base station can receive a plurality of frequencies, frames transmitted from the plurality of terminals can be demodulated simultaneously.

### CITATION LIST

### PATENT DOCUMENT

Patent Document 1: WO 2017/016262

### SUMMARY OF THE INVENTION

### PROBLEMS TO BE SOLVED BY THE INVENTION

However, in the downlink (DL: Down Link) of the LPWA network service, the terminal can receive only one frequency because of a reduction in a processing amount on the terminal side.

The present technology has been made in view of such a situation, and an object thereof is to avoid frame interference between base stations.

### SOLUTIONS TO PROBLEMS

A wireless communication device according to a first aspect of the present technology includes a communication control unit that performs control to transmit an identification frame including identification information for identifying a base station, and control to acquire data from a cloud to a wireless communication terminal on the basis of the request frame and transmit a data frame including the acquired data to the wireless communication terminal in a case where the identification information included in a request frame transmitted from the wireless communication terminal on the basis of the identification information matches the identification information of its own.

A wireless communication terminal according to a second aspect of the present technology includes a communication control unit that performs control to receive an identification frame including identification information for identifying a base station transmitted from a wireless communication device, control to transmit a request frame for data transmission on the basis of the identification information extracted from the identification frame in which signal strength is the highest among the received identification frames, and control to receive a data frame acquired by the wireless communication device from a cloud on the basis of the request frame and transmitted by the wireless communication device.

In the first aspect of the present technology, control to transmit an identification frame including identification information for identifying a base station, and control to acquire data from a cloud to a wireless communication terminal on the basis of the request frame and transmit a data frame including the acquired data to the wireless communication terminal in a case where the identification information included in a request frame transmitted from the wireless communication terminal on the basis of the identification information matches the identification information of its own are performed.

In the second aspect of the present technology, control to receive an identification frame including identification information for identifying a base station transmitted from a wireless communication device, control to transmit a request frame for data transmission on the basis of the identification information extracted from the identification frame in which signal strength is the highest among the received identification frames, and control to receive a data frame acquired by the wireless communication device from a cloud on the basis of the request frame and transmitted by the wireless communication device are performed.

### BRIEF DESCRIPTION OF DRAWINGS

Fig. 1 is a diagram illustrating a configuration example of a wireless communication system according to a first embodiment of the present technology.
Fig. 2 is a block diagram illustrating a first configuration example of a communication device to which the present technology is applied.
Fig. 3 is a block diagram illustrating a second configuration example of a communication device to which the present technology is applied.
Fig. 4 is a diagram illustrating a DL sequence in the first embodiment.
Fig. 5 is a diagram schematically illustrating the DL sequence in Fig. 4 in the wireless communication system of Fig. 1.
Fig. 6 is a diagram illustrating an application example of the wireless communication system in Fig. 1.
Fig. 7 is a flowchart for explaining a region determination processing of a terminal.
Fig. 8 is a diagram illustrating a configuration example of a base station load distribution control system according to a second embodiment of the present technology.
Fig. 9 is a diagram illustrating a DL sequence in the second embodiment.
Fig. 10 is a diagram schematically illustrating the DL sequence in Fig. 9 in the base station load distribution control system of Fig. 8.
Fig. 11 is a flowchart illustrating processing of a terminal in the DL sequence in Fig. 9.
Fig. 12 is a block diagram illustrating a configuration example of a computer.

### MODE FOR CARRYING OUT THE INVENTION

Hereinafter, modes for carrying out the present technology will be described. The description will be given in the following order.
1. First Embodiment (Wireless Communication System)
2. Application Example
3. Second Embodiment (Base Station Load Distribution Control System)
4. Others

### <1. First Embodiment>

### <Configuration Example of Wireless Communication System>

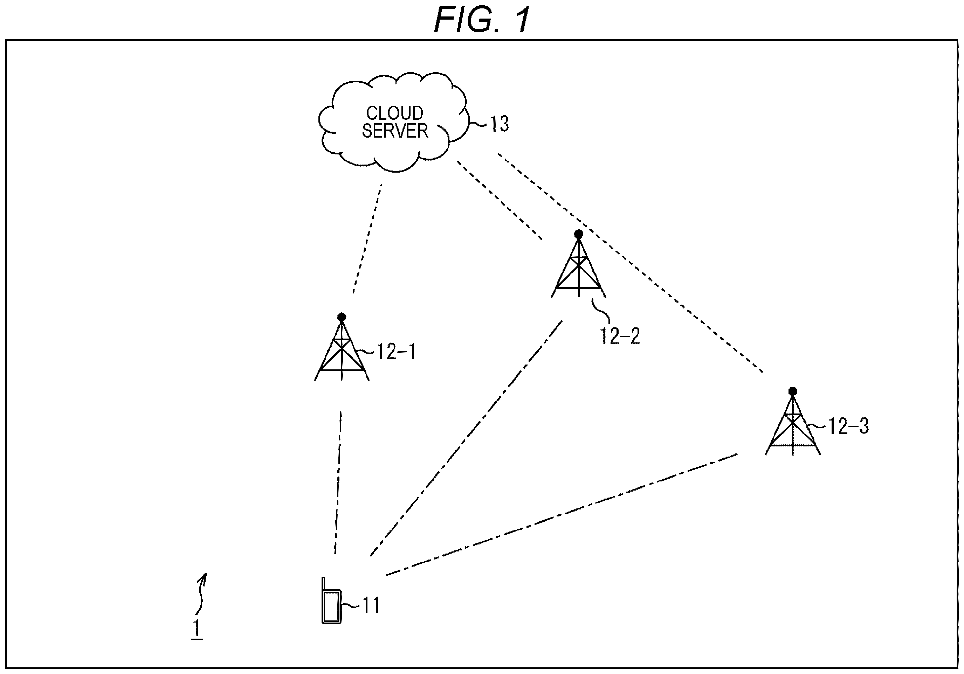

Fig. 1 is a diagram illustrating a configuration example of a wireless communication system according to a first embodiment of the present technology.

A wireless communication system 1 in Fig. 1 is a wireless communication system for realizing the LPWA network service described above.

The wireless communication system 1 includes one terminal 11, three base stations 12-1 to 12-3, and a cloud server 13. Note that the base stations 12-1 to 12-3 are referred to as base stations 12 in a case where it is not particularly necessary to distinguish them.

The terminal 11 and the base station 12 are connected by wireless communication. The base station 12 and the cloud server 13 are connected by wireless communication. Note that the base station 12 and the cloud server 13 may be connected by wired communication.

BaseStationID (BSID), which is unique identification information for identifying the base station, is allocated to the base station 12 in advance. Note that the BSID can be set from the cloud server 13. The BSID can be changed only in a case where the BSID is synchronously changed in all the base stations 12.

The terminal 11 receives, for example, a frame in which signal strength (RSSI: Received Signal Strength Indicator) is the highest among BSID frames including the BSID transmitted from the base station 12. The terminal 11 extracts the BSID from the frame in which the signal strength is the highest.

The terminal 11 transmits a DL request frame for making a DL request for desired data included in the cloud server 13 to the base station 12 of the extracted BSID. The terminal 11 receives a data frame corresponding to the desired data from the base station 12 to which the DL request frame has been transmitted. The frequency hopping technology is used for wireless communication between the terminal 11 and the base station 12.

The base station 12 broadcasts the BSID frame at a specific time at a frequency determined by the specific time information. In a case where the base station 12 receives the DL request frame of the desired data in the cloud server 13 from the terminal 11, the base station 12 acquires the desired data from the cloud server 13. The base station 12 transmits a data frame corresponding to the data acquired from the cloud server 13 to the terminal 11.

The cloud server 13 includes, for example, a content server that distributes content or the like on a cloud. The cloud server 13 transmits the desired data to the terminal 11 via the base station 12 that makes an acquisition request for the desired data from the terminal 11.

Note that, in Fig. 1, one terminal 11 is illustrated for convenience of description, but there may be a plurality of terminals 11. Similarly, although three base stations 12 are illustrated in Fig. 1, the number of the base stations 12 may be two or four or more.

### <Configuration of Device>

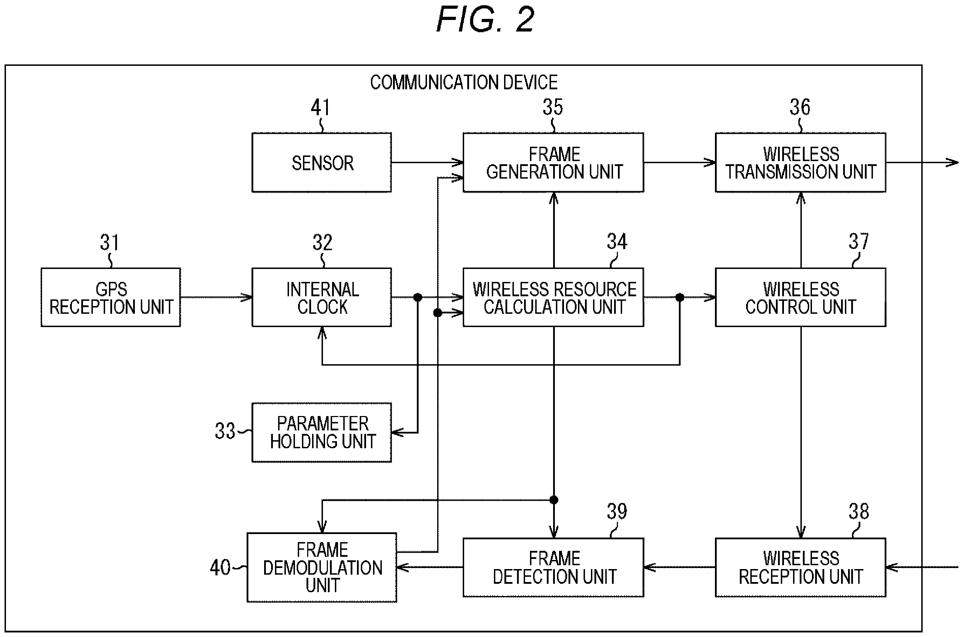

Fig. 2 is a block diagram illustrating a first configuration example of a communication device to which the present technology is applied.

The communication device illustrated in Fig. 2 is a communication device that operates as the terminal 11.

The communication device includes a global positioning system (GPS) reception unit 31, an internal clock 32, a parameter holding unit 33, a wireless resource calculation unit 34, a frame generation unit 35, a wireless transmission unit 36, a wireless control unit 37, a wireless reception unit 38, a frame detection unit 39, a frame demodulation unit 40, and a sensor 41.

The GPS reception unit 31 receives a GPS signal from GPS satellites and acquires time information.

The internal clock 32 acquires the time information from the GPS reception unit 31, and calculates the current time by measuring the elapsed time from the acquired time point. The internal clock 32 outputs the current time to the wireless control unit 37 and the wireless resource calculation unit 34.

The parameter holding unit 33 holds a frequency determined by the specific time information at a specific time when a BSID frame is transmitted from the base station 12. Furthermore, the parameter holding unit 33 holds the BSID allocated to all the base stations 12, and the frequency hopping pattern (for example, the frequency, the hopping period, and the reference time) determined by the BSID and the time information.

The wireless resource calculation unit 34 determines a time, a frequency, and codes (a SYNC code and a scramble code) at and with which a UL frame is transmitted to base station 12 on the basis of the information obtained from the internal clock 32 and the parameter holding unit 33. The wireless resource calculation unit 34 determines a time, a frequency, and codes at and with which the BSID frame and a DL frame are received from the base station 12 on the basis of the information obtained from the internal clock 32 and the parameter holding unit 33. The wireless resource calculation unit 34 outputs information of the determined time, frequency, and codes to the frame generation unit 35, the wireless control unit 37, the frame detection unit 39, and the frame demodulation unit 40.

The frame generation unit 35 generates the UL frame to be transmitted to the base station 12 on the basis of a code obtained from the wireless resource calculation unit 34. In the frame to be transmitted to the base station 12, for example, sensor information acquired by the sensor 41 is stored.

The wireless transmission unit 36 transmits a wireless signal. Specifically, under the control of the wireless control unit 37, the wireless transmission unit 36 converts the UL frame generated by the frame generation unit 35 into a wireless signal and transmits the wireless signal by a radio wave.

The wireless control unit 37 acquires the current time from the internal clock 32, and control the wireless transmission unit 36 so as to transmit the UL frame at the transmission time and the transmission frequency obtained from the wireless resource calculation unit 34. Furthermore, the wireless control unit 37 acquires, from the wireless resource calculation unit 34, a time and a frequency at which the BSID frame and the DL frame are received from the base station 12, and controls the wireless reception unit 38 so as to perform reception processing at the corresponding time and frequency.

The wireless reception unit 38 receives a wireless signal. Specifically, under the control of the wireless control unit 37, the wireless reception unit 38 receives a radio wave, converts the radio wave into a wireless signal, and passes the wireless signal to the frame detection unit 39.

The frame detection unit 39 detects a frame from a received signal received by the wireless reception unit 38. Specifically, the frame detection unit 39 extracts a signal of a target frequency from a broadband signal, generates a plurality of synchronization patterns (known sequences) from the SYNC code and a plurality of the scramble codes determined by the wireless resource calculation unit 34, calculates signal strength that is a correlation value between each synchronization pattern and the received signal, and determines that the frame has been detected in a case where the signal strength is a certain value or more.

The frame demodulation unit 40 demodulates a frame from the received signal. Specifically, the frame demodulation unit 40 descrambles the received signal using the scramble code calculated by the wireless resource calculation unit 34 on the basis of the time when the frame detection unit 39 detects the frame. Thereafter, the frame demodulation unit 40 extracts a payload of the frame from the received signal, and performs decoding processing of an error correction code and error correction using a cyclic redundancy code (CRC) .

The sensor 41 includes a sensor element that acquires information of the outside or inside of the terminal 11. The sensor information acquired by the sensor 41 is stored in a frame to be transmitted to the base station 12.

The sensor 41 includes, for example, a temperature sensor or an acceleration sensor. In a case where it is desired to acquire position information as the sensor information, the GPS reception unit 31 may also serve as the sensor 41.

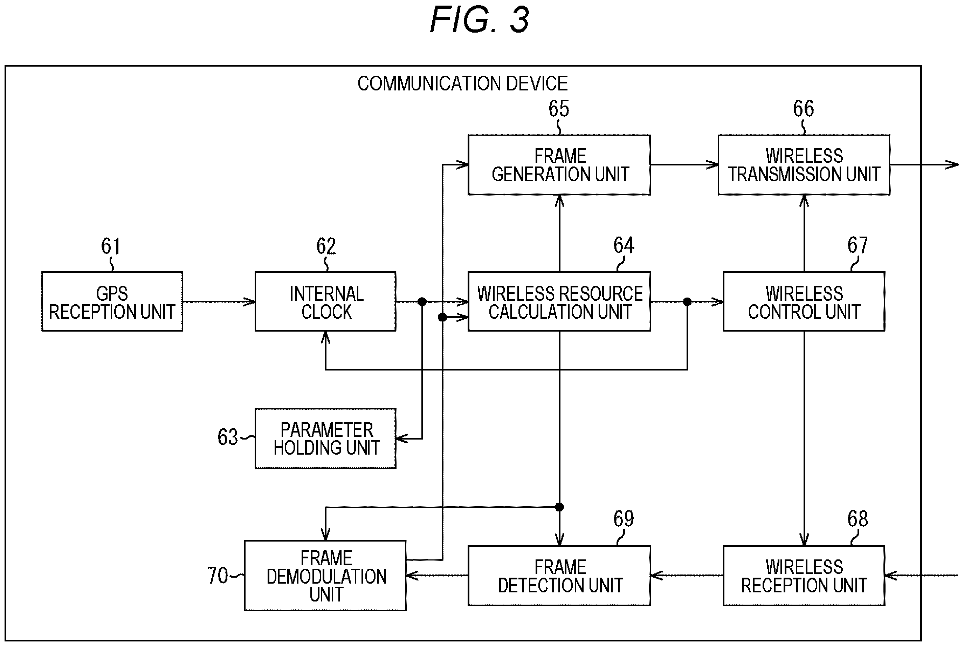

Fig. 3 is a block diagram illustrating a second configuration example of a communication device to which the present technology is applied.

The communication device illustrated in Fig. 3 is a communication device that operates as the base station 12.

The communication device includes a GPS reception unit 61, an internal clock 62, a parameter holding unit 63, a wireless resource calculation unit 64, a frame generation unit 65, a wireless transmission unit 66, a wireless control unit 67, a wireless reception unit 68, a frame detection unit 69, and a frame demodulation unit 70.

The GPS reception unit 61 to the frame demodulation unit 70 in Fig. 3 have the same configurations as the GPS reception unit 31 to the frame demodulation unit 40 in Fig. 2, respectively, and thus the description thereof will be omitted.

### <DL Sequence>

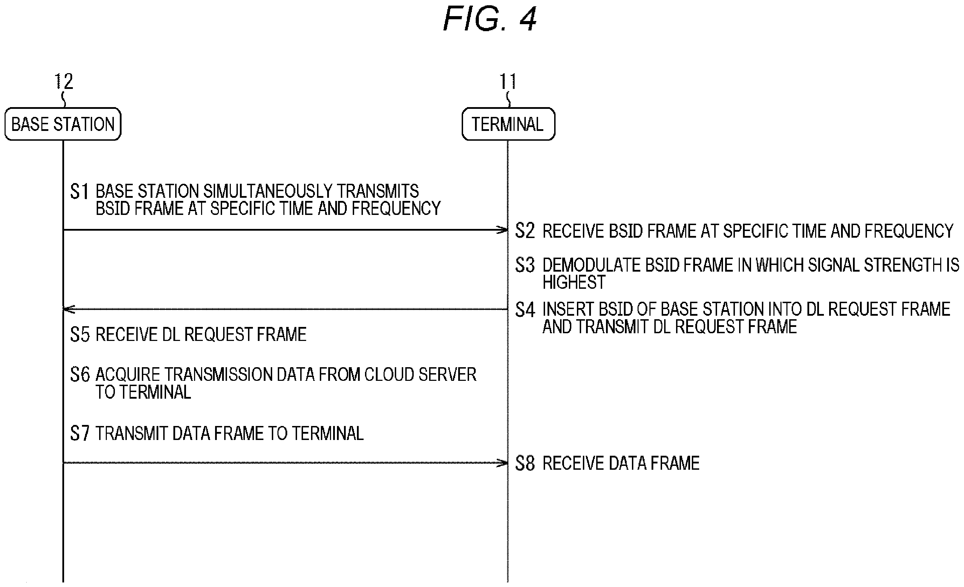

Fig. 4 is a diagram illustrating a DL sequence in the first embodiment.

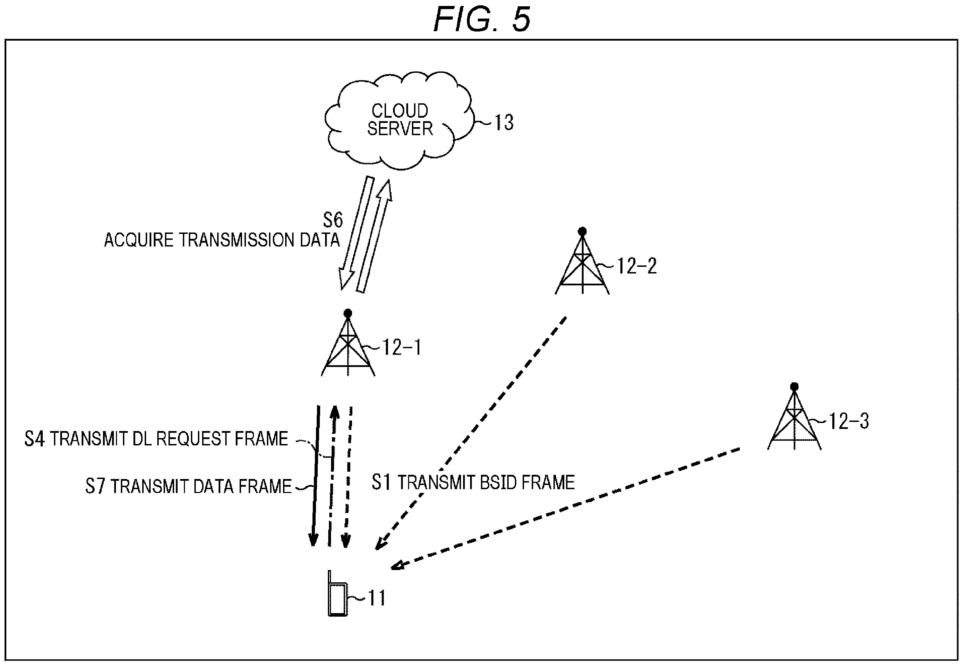

Note that Fig. 5 is appropriately referred to in describing the DL sequence in Fig. 4.

Fig. 5 is a diagram schematically illustrating the DL sequence in Fig. 4 in the wireless communication system 1 in Fig. 1.

In step S1, all the base stations 12 broadcast their own BSID frames at a specific time at a frequency determined by the specific time information so that the terminal 11 can receive the BSID frames (dashed arrows in Fig. 5). That is, the BSID frame is simultaneously transmitted from each base station 12.

At that time, since the BSID frames always collide, different synchronization patterns are added by each base station 12 so that the terminal 11 can be synchronized even if the BSID frames collide. Furthermore, the payload of the BSID frame may include accompanying information such as time information in addition to the BSID.

In step S2, the terminal 11 receives the BSID frame at the specific time at the frequency determined by the specific time information.

In step S3, the terminal 11 demodulates the BSID frame, and acquires the BSID from the payload of the demodulated BSID frame.

That is, the terminal 11 prepares a plurality of synchronization patterns, calculates signal strength for all the synchronization patterns, synchronizes the synchronization pattern in which the signal strength is the highest, and detects the BSID frame. For example, in the case of Fig. 5, since the base station 12-1 is closest to the terminal 11, the BSID frame transmitted from the base station 12-1 is detected by synchronizing the synchronization pattern in which the signal strength is the highest.

The terminal 11 demodulates the detected BSID frame and extracts the BSID from the payload of the demodulated BSID frame.

In step S4, the terminal 11 inserts the extracted BSID into a DL request frame and transmits the DL request frame in order to request the DL frame transmission (a dashed-dotted line arrow in Fig. 5).

In step S5, the base station 12-1 receives the DL request frame and checks whether the BSID of the DL request frame matches its own ID.

In step S6, in a case where the DL request frame is a request for DL frame transmission to the base station 12-1, the base station 12-1 acquires desired data from the cloud server 13 to the terminal 11 (white arrows in Fig. 5).

In step S7, the base station 12-1 transmits the acquired desired data to the terminal 11 as a data frame. At this time, the base station 12-1 transmits the data frame using the frequency hopping pattern determined from the BSID and the time information as described above (a solid arrow in Fig. 5).

In step S8, the terminal 11 receives the data frame transmitted from the base station 12-1 by using the frequency hopping pattern of the base station 12-1, the frequency hopping pattern being determined from the BSID and the time information.

As described above, since the base station 12 periodically broadcasts the BSID frame notifying its own BSID, the terminal 11 can receive the BSID frame and obtain, from the BSID and the time information, the frequency hopping pattern for receiving the data frame.

As a result, interference of the data frames between the base stations 12 can be avoided, and frame reception performance is improved.

Furthermore, the BSID frames are transmitted on the same time and channel at all the base stations. Therefore, in order to enhance the interference resistance, the synchronization pattern is changed according to the BSID. As a result, even if the BSID frames interfere with each other, the synchronization pattern is different, so that the interference resistance of the BSID frames is improved.

Note that, as described above, not only the BSID but also accompanying information such as time information can be attached to the BSID frame. In this way, the terminal 11 can obtain necessary information from the base station 12 without making a request to the base station 12.

### <2. Application Example>

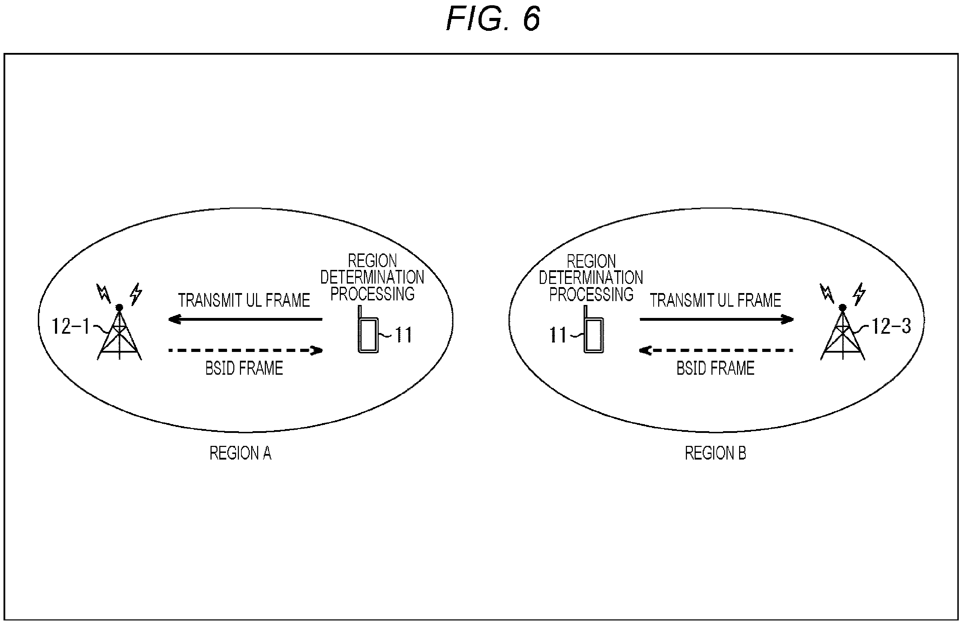

Fig. 6 is a diagram illustrating an application example of the wireless communication system 1 in Fig. 1.

In a case where the user uses the terminal 11 across regions, the terminal 11 needs to change a transmission profile such as frequency. Since the region is unknown in the communication of only UL frame transmission, the user needs to manually change the transmission profile of the terminal 11.

Therefore, the BSID of the base station 12 is different for each region. As a result, the terminal 11 can determine the region by receiving the BSID frame from the base station 12.

For example, Fig. 6 illustrates an example in which the BSID of the base station 12-1 is allocated to the region A, and the BSID of the base station 12-3 is allocated to the region B.

As illustrated on the left side of Fig. 6, in a case where the terminal 11 receives the BSID frame from the base station 12-1, the terminal 11 determines that the region is the region A, switches to the transmission profile of the region A, and performs the UL frame transmission.

Similarly, as illustrated on the right side of Fig. 6, in a case where the terminal 11 receives the BSID frame from the base station 12-3, the terminal 11 determines that the region is the region B, switches to the transmission profile of the region B, and performs the UL frame transmission.

As described above, even when the terminal 11 moves across different regions, the transmission profile can be easily switched in the UL frame transmission.

### <Region Determination Processing of Terminal>

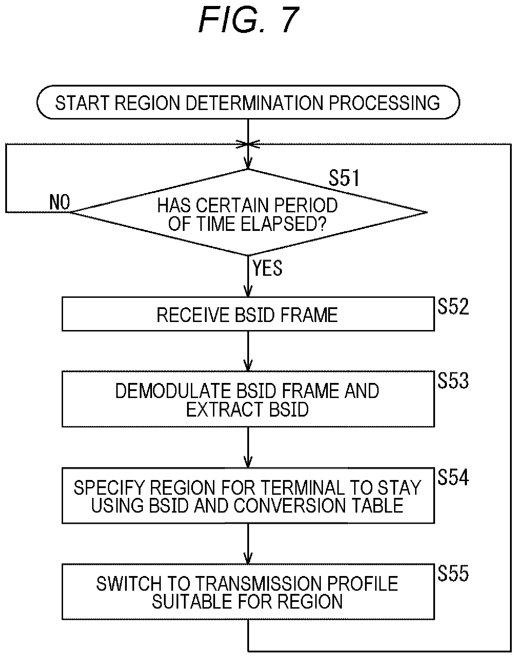

Fig. 7 is a flowchart for explaining a region determination processing of the terminal 11.

Note that, for example, a conversion table for associating the BSID and the region is stored in advance in the parameter holding unit 33 of the terminal 11.

In step S51, the wireless control unit 37 waits until it is determined that a certain period of time has elapsed. In a case where it is determined in step S51 that the certain time has elapsed, the process proceeds to step S52.

As described above with reference to Fig. 4, the base station 12 broadcasts its own BSID frame at a specific time at a frequency determined by the specific time information. Note that, in the case of Fig. 7, the BSID frame is not limited to broadcast, and the base station 12 may transmit the BSID frame to the individual terminal 11.

In step S52, the wireless reception unit 38 receives a BSID frame at a specific time at a frequency determined by the specific time information under the control of the wireless control unit 37.

In step S53, the frame detection unit 39 calculates the signal strength for all the synchronization patterns, synchronizes the synchronization pattern in which the signal strength is the highest, and detects the BSID frame. The frame demodulation unit 40 demodulates the detected BSID frame and extracts the BSID from the payload of the demodulated BSID frame.

In step S54, the wireless resource calculation unit 34 specifies a region for the terminal 11 to stay using the extracted BSID and the conversion table.

In step S55, a wireless communication unit 37 switches the transmission profile to a transmission profile suitable for the specified region. Thereafter, the process returns to step S51, and the subsequent processes are repeated.

As described above, the terminal does not need to manually change the transmission profile each time the terminal moves across regions, and can efficiently transmit the UL frame.

### <3. Second Embodiment>

### <Configuration Example of Base Station Load Distribution Control System>

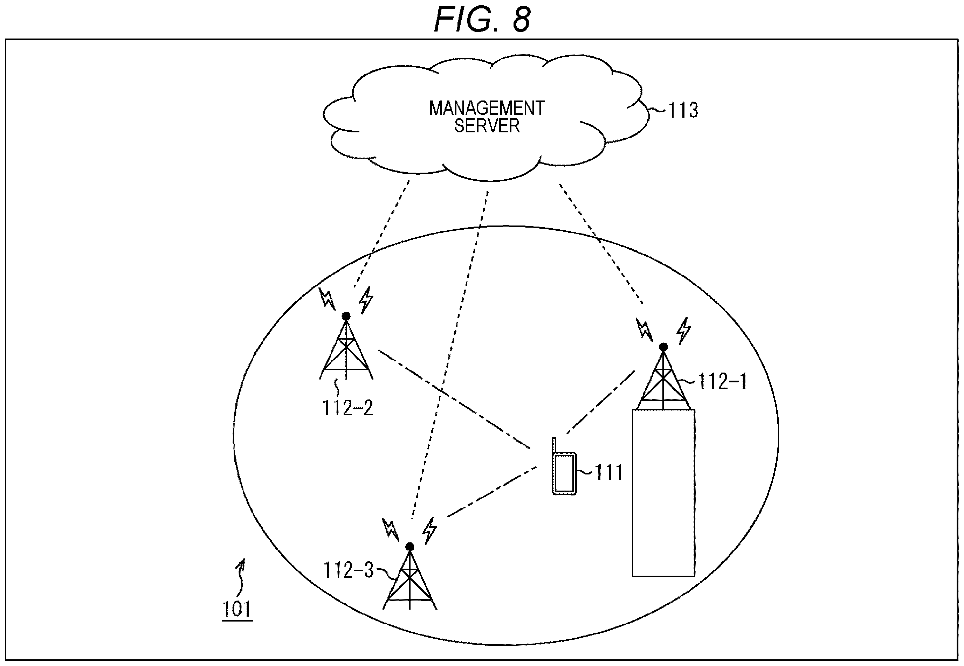

Fig. 8 is a diagram illustrating a configuration example of a base station load distribution control system according to a second embodiment of the present technology.

A base station load distribution control system 101 in Fig. 8 is a wireless communication system for realizing the LPWA network service, similarly to the wireless communication system 1 in Fig. 1.

In the wireless communication system 1 of the first embodiment described above, when receiving the BSID frame, the terminal 11 detects the base station 12 in which the signal strength is the highest, and transmits the DL request frame to the base station 12. In the base station 12 installed in a place where visibility is good, such as a high-rise building or a high ground, the signal strength tends to be always higher than the other base stations 12, and there is a concern that DL request frames are concentrated.

Therefore, in the second embodiment, the base station load distribution control system 101 will be described in which a terminal 111 itself avoids transmitting a DL request frame to a base station 112-1 installed on a high ground in which load is concentrated, and transmits the DL request frame to a base station 112 having a load lower than that of the base station 112-1.

The base station load distribution control system 101 includes one terminal 111, three base stations 112-1 to 112-3, and a management server 113.

Note that although not illustrated in Fig. 8, there is also the cloud server 13 in Fig. 1. Furthermore, the base stations 112-1 to 112-3 are referred to as base stations 112 in a case where it is not particularly necessary to distinguish them.

The terminal 111 and the base station 112 are connected by wireless communication. The base station 112 and the management server 113 are connected by wireless communication. Note that the base station 112 and the management server 113 may be connected by wired communication.

The BSID is allocated to the base station 112 in advance, similarly to the base station 12 in Fig. 1.

The terminal 111 receives a BSID frame in which the signal strength is the highest among the BSID frames transmitted from the base station 112. In a case where the terminal 111 determines that there is a concentration flag in the BSID frame in which the signal strength is the highest, the terminal 111 extracts the BSID from the BSID frame in which the signal strength is the second highest.

The terminal 111 transmits a DL request frame of desired data included in the cloud server 13 to the base station 112 of the extracted BSID, and receives a data frame corresponding to the desired data from the base station 12. The frequency hopping technology is used for wireless communication between the terminal 111 and the base station 112.

In a case of receiving the notification of concentration to the base station 112 from the management server 113, the base station 112 sets the concentration flag in the BSID frame. The base station 112 broadcasts the BSID frame at a specific time at a frequency determined by the specific time information.

In a case receiving a DL request frame of desired data in the cloud server 13 from the terminal 111, the base station 112 acquires the desired data from the cloud server 13. The base station 112 transmits a data frame corresponding to the acquired data to the terminal 111.

The management server 113 is a server that monitors concentration of DL request frames to the base station 112 on the cloud. In a case where the concentration of the DL request frames to a certain base station 112 exceeds a predetermined threshold value, the management server 113 notifies the base station 112 of the concentration of the DL request frames to the base station 112.

Note that the numbers and configurations of the communication devices operating as the terminals 111 and the communication devices operating as the base stations 112 are similar to the numbers and configurations of the terminals 11 and the base stations 12 described above with reference to Figs. 1 to 3. Furthermore, the cloud server 13 and the management server 113 may be configured as one device.

### <DL Sequence>

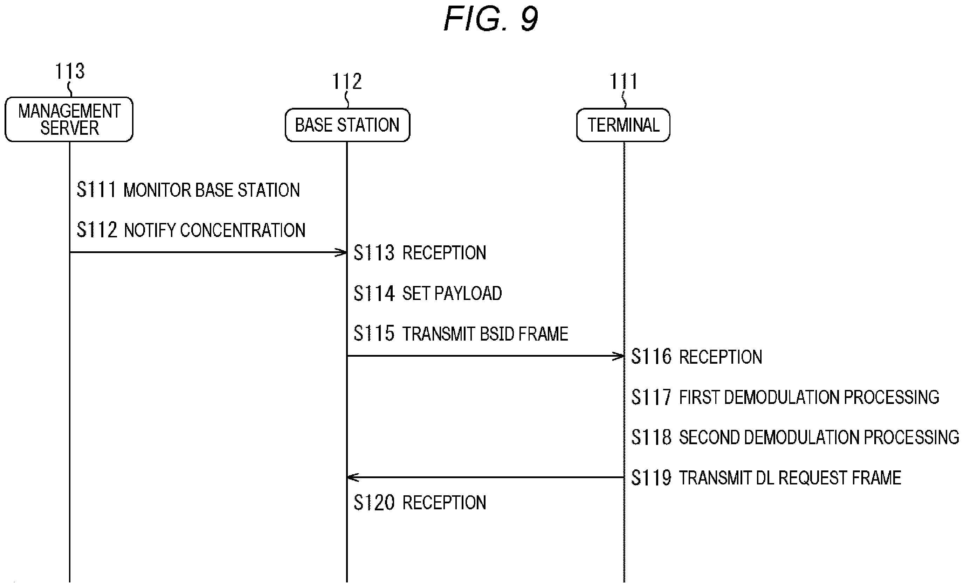

Fig. 9 is a diagram illustrating a DL sequence in the second embodiment.

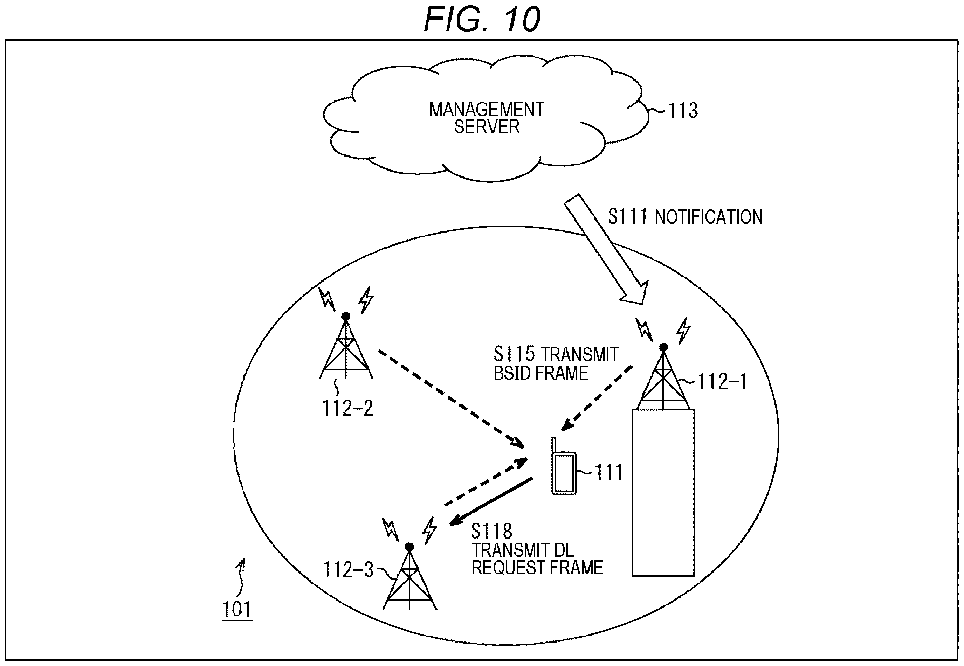

Note that Fig. 10 is appropriately referred to in describing the DL sequence in Fig. 9.

Fig. 10 is a diagram schematically illustrating the DL sequence in Fig. 9 in the base station load distribution control system 101 in Fig. 8.

In step S111, the management server 113 monitors the base station 112.

In a case where the concentration of the DL request to a certain base station 112 exceeds a predetermined threshold value, in step S112, the management server 113 notifies the base station 112 of the concentration of the DL request to the base station 112 (a white arrow in Fig. 10) .

In step S113, the base station 112 receives the notification of the concentration of the DL request.

In step S114, the base station 112 that has received the notification of the concentration of the DL request sets the concentration flag in the payload of the BSID frame.

In step S115, the base station 112 broadcasts the BSID frame at a specific time at a frequency determined by the specific time information (dashed arrows in Fig. 10) .

In step S116, the terminal 111 receives the BSID frame.

In step S117, the terminal 111 performs first demodulation processing. That is, the terminal 111 prepares a plurality of synchronization patterns, calculates signal strength for all the synchronization patterns, synchronizes the synchronization pattern in which the signal strength is the highest, and detects the BSID frame. For example, in the case of Fig. 5, since the base station 12-1, which is close to the terminal 11, is installed on a high ground, the BSID frame transmitted from the base station 12-1 is detected by synchronizing a synchronization pattern in which the signal strength is the highest. The terminal 111 performs the first demodulation processing on the detected BSID frame.

In step S118, in a case where there is a concentration flag in the payload of the BSID frame on which the first demodulation processing has been performed, the terminal 111 performs second demodulation processing. That is, in a case where there is a concentration flag in the payload of the demodulated BSID frame, the terminal 111 synchronizes the synchronization pattern in which the signal strength is the second highest, and detects the BSID frame transmitted from the base station 12-3. The terminal 111 performs the second demodulation processing on the detected BSID frame.

Note that, as a determination condition in step S118, the above-described second demodulation processing may be performed only in a case where there is a concentration flag in the payload of the BSID frame on which the first demodulation processing has been performed and the second highest signal strength is the threshold value.

In step S119, the terminal 11 extracts the BSID from the payload of the BSID frame on which the second demodulation processing has been performed, inserts the extracted BSID into a DL request frame, and transmits the DL request frame in order to request the DL frame transmission (a solid arrow in Fig. 10).

Note that, in a case where the second demodulation processing is not performed, the BSID is extracted from the payload of the BSID frame subjected to the 11-th demodulation processing and included in the DL request frame.

In step S120, the base station 12-3 receives the DL request frame and checks whether the BSID of the DL request frame matches its own ID. Note that the subsequent processing is similar to the processing after step S7 in Fig. 4, and thus illustration and description thereof are omitted.

As described above, in a case where the management server 113 notifies the concentration of the DL request frame of the base station 12, the concentration flag is set to the BSID frame periodically broadcast by the base station 12, so that the terminal 11 can demodulate the BSID frame in which the signal strength is the second highest.

As a result, it is possible to avoid concentration of the DL request frames in the base station 12.

### <Processing by Terminal>

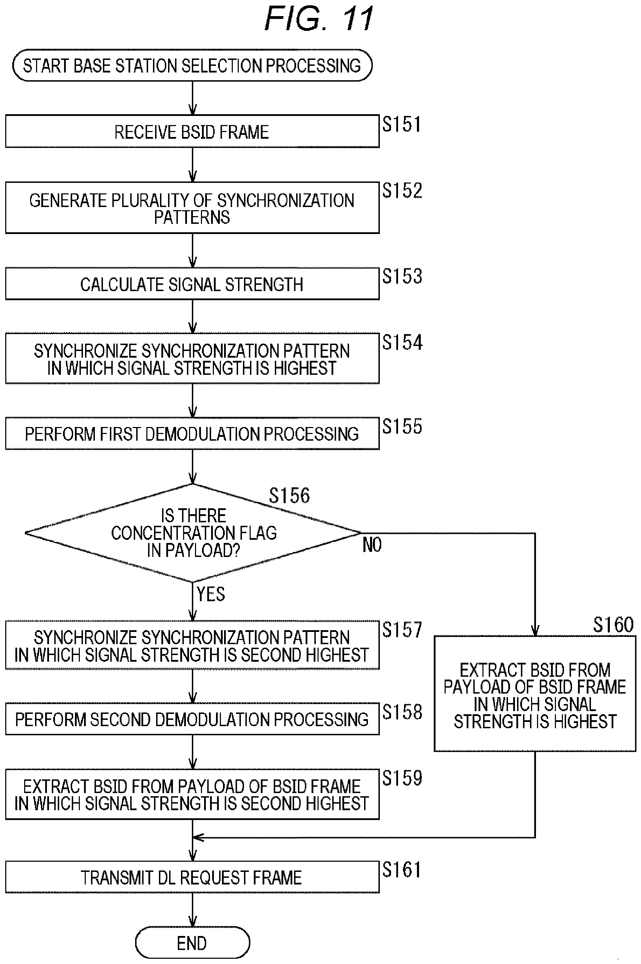

Fig. 11 is a flowchart illustrating processing of the terminal 111 in the DL sequence in Fig. 9.

In step S151, the wireless reception unit 38 receives the BSID frame at a specific time at a frequency determined by the specific time information.

In step S152, the frame detection unit 39 extracts a signal of a target frequency from a broadband signal, and generates a plurality of synchronization patterns from the SYNC code and a plurality of the scramble codes determined by the wireless resource calculation unit 34.

In step S153, the frame detection unit 39 calculates signal strength that is a correlation value between each synchronization pattern and the received signal.

In step S154, the frame detection unit 39 synchronizes the synchronization pattern in which the signal strength is the highest.

In step S155, the frame demodulation unit 40 performs the first demodulation processing on the BSID frame in which the signal strength is the highest, and acquires the payload.

In step S156, the frame detection unit 39 determines whether or not there is a concentration flag in the acquired payload. In a case where it is determined in step S156 that there is a concentration flag in the payload, the process proceeds to step S157.

In step S157, the frame detection unit 39 synchronizes the synchronization pattern in which the signal strength is the second highest.

In step S158, the frame demodulation unit 40 performs the second demodulation processing on the BSID frame in which the signal strength is the second highest, and acquires the payload.

In step S159, the frame demodulation unit 40 acquires the BSID from the payload of the BSID frame in which the signal strength is the second highest. The frame demodulation unit 40 outputs the acquired BSID frame to the wireless resource calculation unit 34 and the frame generation unit 35.

In a case where it is determined in step S156 that there is no concentration flag in the payload, the process proceeds to step S160.

In step S160, the frame demodulation unit 40 extracts the BSID from the payload of the BSID frame in which the signal strength is the highest. The frame demodulation unit 40 outputs the extracted BSID frame to the wireless resource calculation unit 34 and the frame generation unit 35.

After step S159 or S160, the process proceeds to step S161.

In step S161, the wireless transmission unit 36 transmits the DL request frame on the basis of the extracted BSID.

That is, the wireless resource calculation unit 34 determines a time, a frequency, and a code at and with which the UL frame is transmitted to the base station 12 on the basis of the internal clock 32, the BSID supplied from the frame demodulation unit 40, and the information obtained from the parameter holding unit 33. The determined time, frequency, and code are output to the wireless transmission unit 36, the wireless control unit 37, and the like. The frame generation unit 35 generates a DL request frame including the BSID supplied from the frame demodulation unit 40, and outputs the generated DL request frame to the wireless transmission unit 36. The wireless transmission unit 36 transmits a DL request frame to the base station corresponding to the BSID under the control of the wireless control unit 37.

### <4. Others>

### <Effects of Present Technology>

As described above, in the present technology, control to transmit a BSID frame including a BSID for identifying a base station, and control to acquire data from a cloud to a terminal on the basis of a DL request frame and to transmit a data frame including the acquired data to the terminal in a case where the BSID included in the DL request frame transmitted from the terminal on the basis of the BSID matches its own BSID are performed.

Furthermore, in the present technology, control to receive a BSID frame including a BSID for identifying a base station transmitted from a base station, control to transmit a DL request frame for data transmission on the basis of the BSID extracted from the BSID frame in which the signal power is the largest among the received BSID frames, and control to receive a data frame acquired by the base station from the cloud and transmitted by the base station on the basis of the DL request frame are performed.

As described above, according to the present technology, frame interference between base stations can be avoided.

### <Configuration Example of Computer>

The series of processing described above can be executed by hardware and also can be executed by software. In a case where the series of processing is executed by software, a program constituting the software is installed on a computer built into dedicated hardware or a general-purpose personal computer from a program recording medium, or the like.

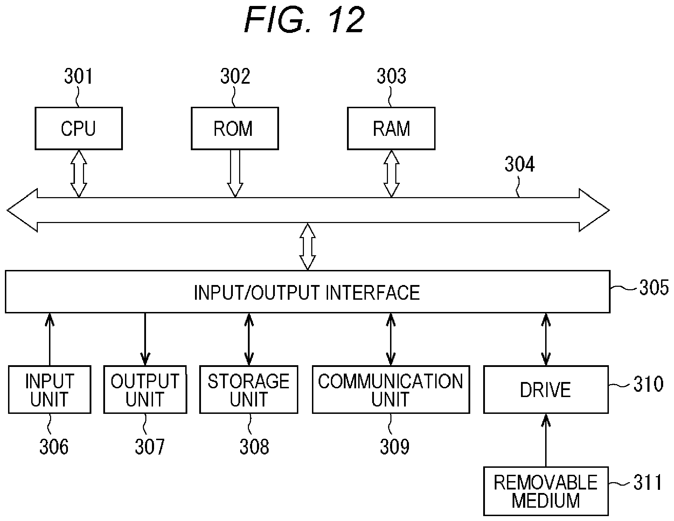

Fig. 12 is a block diagram illustrating a configuration example of hardware of a computer that performs the series of processing described above in accordance with a program.

A central processing unit (CPU) 301, a read only memory (ROM) 302, and a random access memory (RAM) 303 are mutually connected by a bus 304.

Moreover, an input/output interface 305 is connected to the bus 304. An input unit 306 including a keyboard, a mouse, and the like, and an output unit 307 including a display, a speaker, and the like are connected to the input/output interface 305. Furthermore, a storage unit 308 including a hard disk, a nonvolatile memory, or the like, a communication unit 309 including a network interface or the like, and a drive 310 that drives a removable medium 311 are connected to the input/output interface 305.

In the computer configured as described above, the series of processing described above is performed, for example, by the CPU 301 loading the program stored in the storage unit 308 into the RAM 303 via the input/output interface 305 and the bus 304 and executing the program.

The program to be executed by the CPU 301 is provided, for example, by being recorded on the removable medium 311 or via a wired or wireless transmission medium such as a local area network, the Internet, or digital broadcasting and is installed in the storage unit 308.

Note that, a program to be executed by the computer may be a program by which processes are performed in time series in the order described in the present specification, or may be a program by which processes are performed in parallel or a process may be performed at a required time such as when a call is made.

Note that, in the present specification, a system means an assembly of a plurality of components (devices, modules (parts), and the like), and it does not matter whether or not all the components are located in the same housing. Therefore, a plurality of devices housed in separate housings and connected via a network, and one device having a plurality of modules included in one housing are both systems.

Furthermore, the effects described in the present specification are merely examples and not restrictive, and there may also be other effects.

Embodiments of the present technology are not limited to the above-described embodiments, and various modifications may be made without departing from the gist of the present technology.

For example, the present technology may be configured as cloud computing in which one function is shared by a plurality of devices via a network and processing is executed in cooperation.

Furthermore, each of the steps in the flowcharts described above can be executed by one device or executed by a plurality of devices in a shared manner.

Moreover, in a case where a plurality of parts of processing is included in one step, the plurality of parts of processing included in one step can be executed by one device or by a plurality of devices in a shared manner.

### <Combination Examples of Configurations>

The present technology may also have the following configurations.
(1) A wireless communication device including:
   a communication control unit that performs control to transmit an identification frame including identification information for identifying a base station, and control to acquire data from a server to a wireless communication terminal on the basis of the request frame and transmit a data frame including the acquired data to the wireless communication terminal in a case where the identification information included in a request frame transmitted from the wireless communication terminal on the basis of the identification information matches the identification information of its own.
(2) The wireless communication device according to (1), in which
   the communication control unit performs control to transmit the identification frame at a specific time at a frequency determined by the specific time information.
(3) The wireless communication device according to (1) or (2), in which
   the communication control unit performs control to simultaneously transmit the identification frame to another wireless communication device.
(4) The wireless communication device according to any one of (1) to (3), in which
   the communication control unit performs control to transmit the identification frame generated by adding a synchronization pattern different for each base station.
(5) The wireless communication device according to any one of (1) to (4), in which
   the communication control unit performs control to transmit the data frame in a frequency hopping pattern determined on the basis of the identification information.
(6) The wireless communication device according to any one of (1) to (5), in which
   the identification information is separated for each region of the base station.
(7) The wireless communication device according to any one of (1) to (6), further including
   a frame generation unit that generates the identification frame by setting a concentration flag indicating that the request frame is concentrated in a payload in a case where a notification of concentration of the request frame transmitted from a management server is received.
(8) A wireless communication method, in which
   a wireless communication device
   performs control to transmit an identification frame including identification information for identifying a base station, and control to acquire data from a server to a wireless communication terminal on the basis of the request frame and transmit a data frame including the acquired data to the wireless communication terminal in a case where the identification information included in a request frame transmitted from the wireless communication terminal on the basis of the identification information matches the identification information of its own.
(9) A wireless communication terminal including:
   a communication control unit that performs control to receive an identification frame transmitted from a base station, the identification frame including identification information for identifying the base station, control to transmit a request frame for data transmission on the basis of the identification information extracted from the identification frame in which signal strength is the highest among the received identification frames, and control to receive a data frame acquired by the base station from a server on the basis of the request frame and transmitted by the base station.
(10) The wireless communication terminal according to (9), in which
   the communication control unit performs control to receive the identification frame at a predetermined specific time at a frequency determined by the specific time.
(11) The wireless communication terminal according to any one of (9) to (10), in which
   the communication control unit further includes a frame demodulation unit that calculates the signal strength for a plurality of synchronization patterns, demodulates the identification frame received by synchronizing the synchronization pattern in which the signal strength is the highest, and extracts the identification information.
(12) The wireless communication terminal according to any one of (9) to (11), in which
   the communication control unit performs control to receive the data frame in a frequency hopping pattern determined on the basis of the extracted identification information.
(13) The wireless communication terminal according to any one of (9) to (12), further including
   a storage unit that stores a conversion table that associates the identification information with a region of the base station,
   in which the communication control unit determines the region on the basis of the extracted identification information.
(14) The wireless communication terminal according to any one of (9) to (13), in which
   the communication control unit performs control to transmit the request frame on the basis of the identification information extracted from the identification frame in which the signal strength is the second highest in a case where a concentration flag indicating that the request frame is concentrated is included in a payload of the identification frame in which the signal strength is the highest.
(15) The wireless communication terminal according to (14), in which
   the communication control unit performs control to transmit the request frame on the basis of the identification information extracted from the identification frame in which the signal strength is the second highest in a case where the concentration flag is included in the payload of the identification frame in which the signal strength is the highest and in a case where the signal strength of the identification frame in which the signal strength is the second highest is equal to or greater than a threshold value.
(16) A wireless communication method, in which
   a wireless communication terminal
   performs control to receive an identification frame transmitted from a base station, the identification frame including identification information for identifying the base station, control to transmit a request frame for data transmission on the basis of the identification information extracted from the identification frame in which signal strength is the highest among the received identification frames, and control to receive a data frame acquired by the base station from a server on the basis of the request frame and transmitted by the base station.

### REFERENCE SIGNS LIST

- 1: Wireless communication system
- 11: Wireless communication device
- 12, 12-1 to 12-3: Base station
- 13: Cloud server
- 31: GPS reception unit
- 32: Internal clock
- 33: Parameter holding unit
- 34: Wireless resource calculation unit
- 35: Frame generation unit
- 36: Wireless transmission unit
- 37: Wireless control unit
- 38: Wireless reception unit
- 37: Wireless control unit
- 38: Wireless reception unit
- 39: Frame reception unit
- 40: Frame demodulation unit
- 41: Sensor
- 61: GPS reception unit
- 62: Internal clock
- 63: Parameter holding unit
- 64: Wireless resource calculation unit
- 65: Frame generation unit
- 66: Wireless transmission unit
- 67: Wireless control unit
- 68: Wireless reception unit
- 67: Wireless control unit
- 68: Wireless reception unit
- 69: Frame reception unit
- 70: Frame demodulation unit
- 101: Base station load distribution control system
- 111: Terminal
- 112, 112-1 to 112-3: Base station
- 113: Management server

## Claims

1. A wireless communication device comprising:
a communication control unit that performs control to transmit an identification frame including identification information for identifying a base station, and control to acquire data from a server to a wireless communication terminal on a basis of the request frame and transmit a data frame including the acquired data to the wireless communication terminal in a case where the identification information included in a request frame transmitted from the wireless communication terminal on a basis of the identification information matches the identification information of its own.

2. The wireless communication device according to claim 1, wherein
the communication control unit performs control to transmit the identification frame at a specific time at a frequency determined by the specific time information.

3. The wireless communication device according to claim 1, wherein
the communication control unit performs control to simultaneously transmit the identification frame to another wireless communication device.

4. The wireless communication device according to claim 1, wherein
the communication control unit performs control to transmit the identification frame generated by adding a synchronization pattern different for each base station.

5. The wireless communication device according to claim 1, wherein
the communication control unit performs control to transmit the data frame in a frequency hopping pattern determined on a basis of the identification information.

6. The wireless communication device according to claim 1, wherein
the identification information is separated for each region of the base station.

7. The wireless communication device according to claim 1, further comprising
a frame generation unit that generates the identification frame by setting a concentration flag indicating that the request frame is concentrated in a payload in a case where a notification of concentration of the request frame transmitted from a management server is received.

8. A wireless communication method, wherein
a wireless communication device
performs control to transmit an identification frame including identification information for identifying a base station, and control to acquire data from a server to a wireless communication terminal on a basis of the request frame and transmit a data frame including the acquired data to the wireless communication terminal in a case where the identification information included in a request frame transmitted from the wireless communication terminal on a basis of the identification information matches the identification information of its own.

9. A wireless communication terminal comprising:
a communication control unit that performs control to receive an identification frame transmitted from a base station, the identification frame including identification information for identifying the base station, control to transmit a request frame for data transmission on a basis of the identification information extracted from the identification frame in which signal strength is the highest among the received identification frames, and control to receive a data frame acquired by the base station from a server on a basis of the request frame and transmitted by the base station.

10. The wireless communication terminal according to claim 9, wherein
the communication control unit performs control to receive the identification frame at a predetermined specific time at a frequency determined by the specific time.

11. The wireless communication terminal according to claim 9, wherein
the communication control unit further comprises a frame demodulation unit that calculates the signal strength for a plurality of synchronization patterns, demodulates the identification frame received by synchronizing the synchronization pattern in which the signal strength is the highest, and extracts the identification information.

12. The wireless communication terminal according to claim 9, wherein
the communication control unit performs control to receive the data frame in a frequency hopping pattern determined on a basis of the extracted identification information.

13. The wireless communication terminal according to claim 9, further comprising
a storage unit that stores a conversion table that associates the identification information with a region of the base station,
wherein the communication control unit determines the region on a basis of the extracted identification information.

14. The wireless communication terminal according to claim 9, wherein
the communication control unit performs control to transmit the request frame on a basis of the identification information extracted from the identification frame in which the signal strength is the second highest in a case where a concentration flag indicating that the request frame is concentrated is included in a payload of the identification frame in which the signal strength is the highest.

15. The wireless communication terminal according to claim 14, wherein
the communication control unit performs control to transmit the request frame on a basis of the identification information extracted from the identification frame in which the signal strength is the second highest in a case where the concentration flag is included in the payload of the identification frame in which the signal strength is the highest and in a case where the signal strength of the identification frame in which the signal strength is the second highest is equal to or greater than a threshold value.

16. A wireless communication method, wherein
a wireless communication terminal
performs control to receive an identification frame transmitted from a base station, the identification frame including identification information for identifying the base station, control to transmit a request frame for data transmission on a basis of the identification information extracted from the identification frame in which signal strength is the highest among the received identification frames, and control to receive a data frame acquired by the base station from a server on a basis of the request frame and transmitted by the base station.
